(19) Europäisches Patentamt
European Patent Office
Office européen des brevets

(11) **EP 4 716 216 A1**

(12) **EUROPEAN PATENT APPLICATION**

(43) Date of publication:
**25.03.2026 Bulletin 2026/13**

(21) Application number: **24306560.4**

(22) Date of filing: **24.09.2024**

(51) International Patent Classification (IPC):
**H04N 19/59** (2014.01)   **G06N 3/08** (2023.01)

(52) Cooperative Patent Classification (CPC):
**H04N 19/59; G06N 3/045; G06N 3/08**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **LE MEUR, Olivier
  35160 TALENSAC (FR)**

• **DAMODARAN, Bharath Bhushan
  56000 VANNES (FR)**
• **EL IDRISSI, Taha
  35700 RENNES (FR)**
• **LAMBERT, Anne
  35250 SAINT-AUBIN-D'AUBIGNE (FR)**
• **SCHNITZLER, Francois
  56890 SAINT AVE (FR)**

(74) Representative: **Interdigital
Immeuble ZEN 2
845 A, avenue des Champs Blancs
35510 Cesson-Sévigné (FR)**

(54) **GAUSSIAN PYRAMID BASED DECOMPOSITION FOR HYBRID INR NETWORK**

(57)    A method and device for decoding an encoded data is based on a hybrid implicit neural representation (INR) network comprising a plurality of INR networks arranged in a plurality of hierarchic levels and latent variables being arranged in a plurality of hierarchic levels. The ground truth images are decomposed using Gaussian pyramid to generate the output images at different resolutions, making it possible to learn one synthesis network per resolution for example. The reconstruction process may be performed in a coarse to fine manner, i.e. from the lowest to the highest resolution.

FIG. 9

**Description**

TECHNICAL FIELD

At least one of the present embodiments generally relates to a method and a device for encoding and decoding data and particularly to a hybrid implicit neural representation network using a gaussian pyramid-based decomposition.

BACKGROUND ART

An implicit neural representation (INR) network is a neural network that is trained to represent a specific signal; the INR network is trained to predict a sample value of the signal when presented with the sample's spatial coordinates. A hybrid INR network improves the INR network's capability to learn local patterns of the signal. To that end, sample coordinates of the signal are first mapped into latent variables and the INR network is trained to represent the signal based on these latent variables. When the hybrid INR network is applied to signal compression, the latent variables represent the signal in the bitstream. To efficiently entropy code the latent variables, their respective distributions should be used. Current approaches estimate the latent variables' respective distributions based on context. The manner in which such context is constructed is instrumental in exploiting spatial and temporal redundancies across the latent variables.

SUMMARY

Embodiments described hereafter are related to method and device for encoding and decoding data. These methods comprise encoding, into a bitstream, a data region of a currently encoded frame. The encoding and decoding are based on a hybrid implicit neural representation (INR) network comprising a plurality of INR networks arranged in a plurality of hierarchic levels and latent variables being arranged in a plurality of hierarchic levels. The ground truth images may be decomposed using Gaussian pyramid to generate the output images at different resolutions, making it possible to learn one synthesis network per resolution for example. The reconstruction process may be performed in a coarse to fine manner, i.e. from the lowest to the highest resolution.

According to an aspect of at least one embodiment, an encoding method comprises decomposing data into hierarchic levels, constructing a set of latent variables arranged in a plurality of levels and train a plurality of INR networks arranged in a plurality of levels, by for the lowest level, training an INR network with latent variables of the lowest level based on a difference between data of the lowest level and reconstructed data of the lowest level, and iterating on subsequent levels of the hierarchy and for each current level, training an INR network of the current level based on a difference between data of the current level and reconstructed data output by the INR network, wherein the input of the INR is a concatenation of an upscaled reconstructed data of the lower level and latent variables of the current level, encoding the latent variables of the plurality of levels and parameters of the plurality of INR networks parameters into a bitstream, wherein the number of levels of the latent variables is identical to the number of levels of the plurality of INR networks.

According to an aspect of at least one embodiment, a decoding method comprises decoding parameters of a plurality of INR networks, the INR networks being arranged in a plurality of levels, configuring the INR networks based on the decoded parameters, decoding latent variables, the latent variables being arranged in a plurality of levels, for the lowest level INR network, producing lowest level reconstructed data with the lowest level INR network having as input the lowest level of latent variables, iterating on the subsequent levels of the hierarchy of INR networks and for each current level, producing reconstructed data with the INR network of the current level having as input a concatenation of latent variables of the current level with an upscaled reconstructed data of the lower level, providing the output of the INR network of highest level as reconstructed data, wherein the number of levels of the latent variables is identical to the number of levels of the plurality of INR networks.

According to an aspect of at least one embodiment, an encoding method comprises decomposing data into hierarchic levels, constructing a set of latent variables arranged in a plurality of levels and train a plurality of INR networks arranged in a plurality of levels, by: for the lowest level, training an INR network with latent variables of the lowest level based on a difference between data of the lowest level and reconstructed data of the lowest level, and iterating on subsequent levels of the hierarchy and for each current level, training an INR network of the current level based on a difference between data of the current level and the addition of reconstructed data output by the INR network to an upscaled reconstructed data of the lower level, wherein the input of the INR network is the latent variables of the current level, encoding the latent variables of the plurality of levels and parameters of the plurality of INR networks parameters into a bitstream, wherein the number of levels of the latent variables is identical to the number of levels of the plurality of INR networks.

According to an aspect of at least one embodiment, a decoding method comprises decoding parameters of a plurality of implicit neural representation(INR) networks, the INR networks being arranged in a plurality of levels, configuring the INR networks based on the decoded parameters, decoding latent variables, the latent variables being arranged in a plurality of levels, for the lowest level INR network, producing lowest level reconstructed data with the lowest level INR network having as input the lowest level of latent variables, iterating on the subsequent levels of the hierarchy of INR networks and for each current level, producing reconstructed data as the addition of an output of the INR network of the current level having as input the latent variables of the current level to an upscaled reconstructed data of the lower level, providing the addition of the output of the INR network of the highest level to an upscaled reconstructed data of the preceding level as reconstructed data, wherein the number of levels of the latent variables is identical to the number of levels of the plurality of INR networks.

According to an aspect of at least one embodiment, an encoding apparatus comprises a processor configured to decompose data into hierarchic levels, construct a set of latent variables arranged in a plurality of levels and train a plurality of INR networks arranged in a plurality of levels, by: for the lowest level, train an INR network with latent variables of the lowest level based on a difference between data of the lowest level and reconstructed data of the lowest level, and iterate on subsequent levels of the hierarchy and for each current level, train an INR network of the current level based on a difference between data of the current level and reconstructed data output by the INR network, wherein the input of the INR is a concatenation of an upscaled reconstructed data of the lower level and latent variables of the current level, encode the latent variables of the plurality of levels and parameters of the plurality of INR networks parameters into a bitstream, wherein the number of levels of the latent variables is identical to the number of levels of the plurality of INR networks.

According to an aspect of at least one embodiment, a decoding apparatus comprises a processor configured to decode parameters of a plurality of INR networks, the INR networks being arranged in a plurality of levels, configure the INR networks based on the decoded parameters, decode latent variables, the latent variables being arranged in a plurality of levels, for the lowest level INR network, produce lowest level reconstructed data with the lowest level INR network having as input the lowest level of latent variables, iterate on the subsequent levels of the hierarchy of INR networks and for each current level, produce reconstructed data with the INR network of the current level having as input a concatenation of latent variables of the current level with an upscaled reconstructed data of the lower level, provide the output of the INR network of highest level as reconstructed data, wherein the number of levels of the latent variables is identical to the number of levels of the plurality of INR networks.

According to an aspect of at least one embodiment, an encoding apparatus comprises a processor configured to decompose data into hierarchic levels, construct a set of latent variables arranged in a plurality of levels and train a plurality of INR networks arranged in a plurality of levels, by: for the lowest level, train an INR network with latent variables of the lowest level based on a difference between data of the lowest level and reconstructed data of the lowest level, and iterate on subsequent levels of the hierarchy and for each current level, train an INR network of the current level based on a difference between data of the current level and the addition of reconstructed data output by the INR network to an upscaled reconstructed data of the lower level, wherein the input of the INR network is the latent variables of the current level, encode the latent variables of the plurality of levels and parameters of the plurality of INR networks parameters into a bitstream, wherein the number of levels of the latent variables is identical to the number of levels of the plurality of INR networks.

According to an aspect of at least one embodiment, a decoding apparatus comprises a processor configured to decode parameters of a plurality of INR networks, the INR networks being arranged in a plurality of levels, configure the INR networks based on the decoded parameters, decode latent variables, the latent variables being arranged in a plurality of levels, for the lowest level INR network, produce lowest level reconstructed data with the lowest level INR network having as input the lowest level of latent variables, iterate on the subsequent levels of the hierarchy of INR networks and for each current level, produce reconstructed data as the addition of an output of the INR network of the current level having as input the latent variables of the current level to an upscaled reconstructed data of the lower level, provide the addition of the output of the INR network of the highest level to an upscaled reconstructed data of the preceding level as reconstructed data, wherein the number of levels of the latent variables is identical to the number of levels of the plurality of INR networks.

One or more of the present embodiments also provide a computer readable storage medium having stored thereon instructions for performing at least part of any of the methods described above. One or more embodiments also provide a computer program product including instructions for performing at least part of any of the methods described above.

Embodiments are described within the context of 2D image compression but also apply to many other signals, such as 2D video, 3D scenes and objects or haptic signals. Furthermore, these approaches have a far lower computational complexity than end-to-end neural compression approaches.

This Summary is provided to introduce a selection of concepts in a simplified form that is further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

BRIEF SUMMARY OF THE DRAWINGS

FIG. 1 is a block diagram of an example system, according to which aspects of the present embodiments can be implemented.

FIG. 2 is a diagram illustrating an example INR network.

FIG. 3 is a block diagram of an example video encoder.

FIG. 4 is a block diagram of an example video decoder.

FIG. 5 is a diagram illustrating a hybrid INR network.

FIG. 6 is a block diagram illustrating an example video encoder applying a hybrid INR network based on COOL-CHIC.

FIG. 7 is a block diagram illustrating an example video decoder applying a hybrid INR network based on COOL-CHIC.

FIG. 8 is a diagram illustrating the decomposition of the input image into multiple hierarchical decompositions using Gaussian Pyramid according to at least one embodiment.

FIG. 9 illustrates an example architecture of an encoder based on a hybrid INR network using a gaussian pyramid decomposition according to a first embodiment.

FIG. 10 illustrates an example architecture of a decoder based on a hybrid INR network using a gaussian pyramid decomposition according to the first embodiment.

FIG. 11 illustrates an example process for encoding data based on a hybrid INR network using a gaussian pyramid decomposition according to the first embodiment.

FIG. 12 illustrates an example process for decoding data based on a hybrid INR network using a gaussian pyramid decomposition according to the first embodiment.

FIG. 13 illustrates an example architecture of an encoder based on hybrid INR network using a gaussian pyramid decomposition according to a second embodiment.

FIG. 14 illustrates an example architecture of a decoder based on a hybrid INR network using a gaussian pyramid decomposition according to the second embodiment.

DETAILED DESCRIPTION

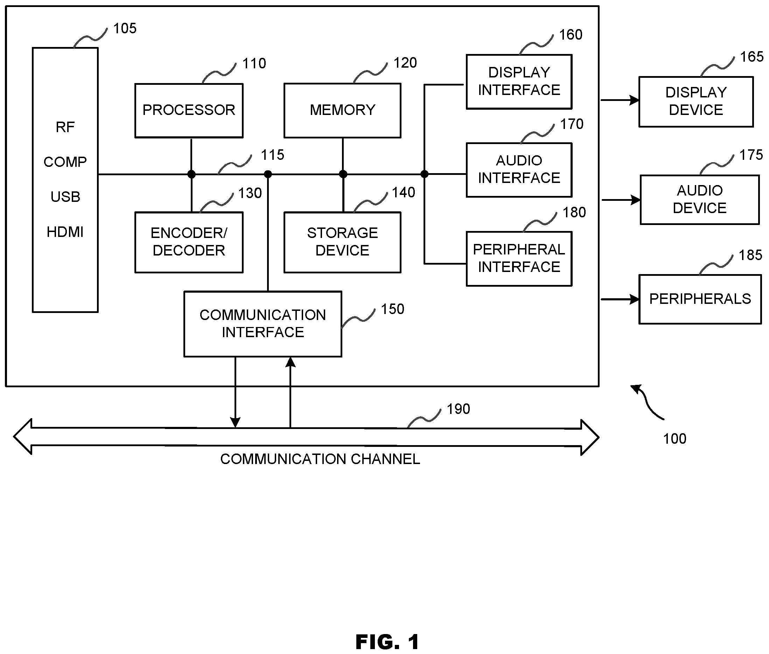

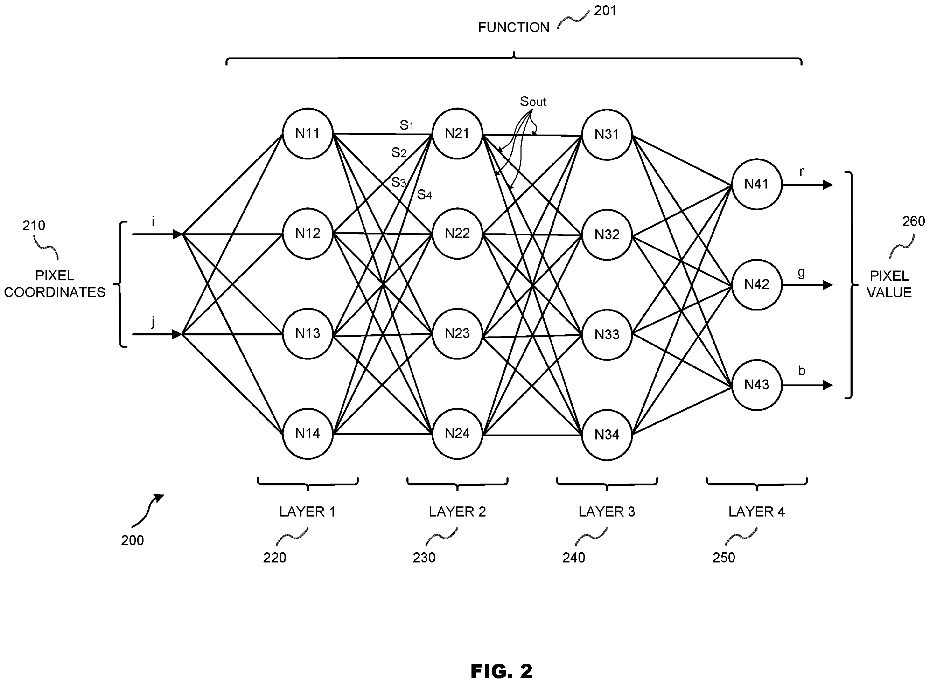

Apparatuses and methods described herein for encoding and decoding data applying a hybrid INR network or a predictive hybrid INR network. A system for processing and displaying content, with which various aspects and examples described herein may be implemented, is generally described in reference to FIG. 1, followed by a description of the aspects of the present disclosure in reference to FIGS. 2-14.

**FIG. 1** is a block diagram of an example system, according to which aspects of the present embodiments can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

Generally, video codecs can be classified into conventional codecs, autoencoders, and overfitted codecs. Conventional codecs, currently the most common ones, are based on predictive coding, such as those following the advance video coding (H.264/AVC), the high efficiency video coding (HEVC), or the versatile video coding (VVC) standards. On the other hand, an autoencoder is a neural network that is trained to map input images (video frames) into respective sets of latent variables and then map back the sets of latent variables to approximated versions of the input images. During training, the autoencoder parameters are optimized to minimize a rate-distortion cost function. Thus, using the trained autoencoder, encoding an image involves mapping the image into a set of latent variables and decoding the image involves mapping the set of latent variables into a reconstructed version of the image. Since autoencoders are generically trained (that is, their training is based on a large number of images) to compete with the performance of conventional codecs, for example, their complexity (the number of parameters and multiplications involved per pixel) is high. Relative to autoencoders, overfitted codecs, using INR networks, offer lower complexity while still achieving the performance levels of conventional codecs.

Representing data via INR networks is a relatively new technology that has only recently been investigated by the computer vision and computer graphics communities. INR networks are studied for the applications of compression, where an efficient representation of signals (such as, still images, videos, surfaces, and volumes) is required. In contrast to an autoencoder, an INR network is trained to represent a specific signal. Hence, unlike autoencoders, an INR-based codec is not generic but is adapted (overfitted) to the signal to be coded and is, therefore, more efficient. Moreover, since the INR network is trained to predict a signal based on the signal's coordinates, the trained network can be applied to progressively reconstruct the signal based on any set of coordinates (e.g., a subset of the coordinates used in the training, or any other set of extrapolated or interpolated coordinates therefrom). For simplicity of the presentation, aspects of INR network applications are described herein with respect to images (e.g., video frames); however, these aspects are extendable to other data frames, such as those representing surfaces of obj ects and volumetric data that may be changing overtime.

**FIG. 2** is a diagram illustrating an example INR network. In such context, an INR network 200 parameterizes a signal as a function 201, which takes coordinates 210 as input and outputs values 260 of a signal at these coordinates. INR networks have recently been applied to image, videos, 3D objects or haptic signals among other applications. In such context, the inputs 210 can be pixel coordinates $(c_1, c_2)$ and the INR may output 260 the color values $(r, g, b)$ or $(y, u, v)$ of the input pixel. The input coordinates may be modified by a transformation before being used as input for the neural network. This transformation can be a Fourier mapping, coordinate transformation, normalization etc. The INR can be used to reconstruct a signal by computing the signal values for every necessary coordinate inputs. It can be used to upsample a signal by generating output for input coordinates corresponding to the upsampled pixels, for example the mean of the coordinates between two consecutive pixels for upsampling by a factor of 2.

An INR network is for example a neural network composed of multiple layers, each layer includes multiple nodes (denoted by circles). Generally, the architecture of a neural network is characterized by the number of layers, the number of layers' nodes, and by the way the layers' nodes are connected. In the example of FIG. 2, the network 200 has four layers 220, 230, 240, 250 that are fully connected. For example, the first layer 220 includes four nodes N11, N12, N13, and N14 that each receives the coordinate values $(c_1, c_2)$ 210 of a pixel $x$ and each outputs an output signal that, in turn, feeds the nodes of the next layer, N21, N22, N23, and N24. Likewise, the second layer 230 includes four nodes N21, N22, N23, and N24, that each receives the output signals of nodes from the previous layer, N11, N12, N13, and N14, and each outputs an output signal that, in turn, feeds the nodes of the next layer, N31, N32, N33, and N34. The fourth layer 250 includes three nodes N41, N42, and N43 that each receives the output signals of the nodes from the previous layer, N31, N32, N33, N34 and each outputs a color component value 260 of the pixel $x$, respectively, $r$, $g$, and $b$ (or color component values of any other color model, such as $y$, $u$, and $v$). Each node in the network 200 represents an operator that generates an output signal based on the node's inputs. For example, node N21 of the second layer 230 receives as an input the output signals of nodes N11, N12, N13, and N14, respectively, $s_1$, $s_2$, $s_3$, and $s_4$. These inputs are translated into an output signal $s_{out}$ that feeds the nodes of the third layer 240. A node's operator can be expressed as follows:

$$s_{out} = A\left(p_0 + \sum_{i=1}^{L} p_i \cdot s_i\right), \qquad (1)$$

where, $L$ denotes the number of input signals (i.e., the number of nodes from the previous layer that connect to the node), $s = \{s_i : i = 1\ to\ L\}$ denotes the node's input signal vector, $s_{out}$ denotes the node's output signal, $p = \{p_i : i = 0\ to\ L\}$ denotes the node's parameter vector (or weight vector), and $A$ denotes an activation function (e.g., ReLU, Sigmoid, or Tanh). Each neural layer can be described as a function that first multiplies the input by a tensor, adds a vector called the bias and then applies a nonlinear function on the resulting values. The shape (and other characteristics) of the tensor and the type of non-linear functions are called the architecture of the network. We will denote the values of the tensor and the bias by the term "weights". The weights (and parameters of the activation functions, if such parameters exist) of respective nodes are collectively referred to as the parameters $\theta$ of the network 200. These parameters $\theta$ are determined through a training process. The network operation, denoted by $f_\theta$, is therefore defined by the network parameters $\theta$. Once the parameters are learned, they may be encoded to create a bitstream allowing to reconstruct the input signal.

Hence, an INR network 200 is trained to predict a pixel value of an image, $x(c_1, c_2)$, based on the pixel's coordinates $(c_1, c_2)$ - that is, $f_\theta(c_1, c_2) = (r, g, b)$ (or $f_\theta(c_1, c_2) = (y, u, v)$). During a training phase of an INR network 200, the parameters $\theta$ (or a subset of them) are determined. This is done via an optimization process through which the parameters

$\theta$ that minimize a loss function can be determined. For example, for an image x of size ($M \times N$), the following cost function can be used:

$$Cost = D(\boldsymbol{x}, f_{\boldsymbol{\theta}}) + \lambda R(\theta) \qquad (2)$$

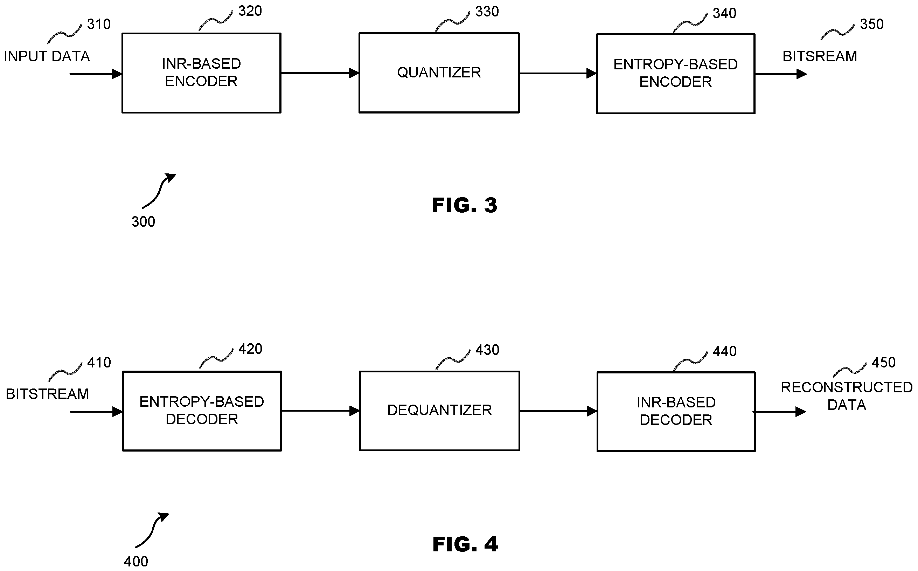

where, $D$ is a distortion measure, measuring the fidelity of the estimated pixel values, provided by $f_\theta$, relative to the ground truth, that is, the corresponding pixel values from the original image, denoted by $\boldsymbol{x}$, $R$ is the resulting bitrate of the encoded parameters $\theta$ (e.g., encoded by quantization and entropy coding as discussed with respect to FIG. 3) and $\lambda$ is a trade-off parameter that can be set to determine the balance between $D$ and $R$. Note that the distortion measure $D$ can be any metric that measure the distance (or similarity) between the original image $\boldsymbol{x}$ and its estimated version provided by $f_\theta$, such as a mean squared error metric or a learned perceptual image patch similarity (LPIPS) metric. For example, a mean squared error metric can be expressed as:

$$D_{MSE} = \frac{1}{MN}\sum_{c_1,c_2 \in [0,N-1]\times[0,M-1]} \left( x(c_1, c_2) - f_{\boldsymbol{\theta}}(c_1, c_2) \right)^2 \ ,$$
$$(3)$$

where, $N$ and $M$ are the width and height of the image $\boldsymbol{x}$ that the INR network is trained to predict. The optimization of the network parameters $\theta$, according to equation (2), is typically performed by a machine learning optimization technique, applying, for example, a batch gradient descent algorithm. Following the training of the INR network 200 and using the optimal parameters $\theta$ (obtained via the optimization process), the INR network can be applied to predict a pixel value based on its corresponding coordinate values.

To decompress the signal, $f_\theta$ is evaluated at all relevant coordinates. These coordinates can be selected at decoding. A typical choice would be all pixel coordinates for an image or video. As an example, for a 256x256 pixel image, these coordinates could be all pairs ($c_1, c_2$) for all $c_1 \in 0,1, ...,255$ and $c_2 \in 0,1, ...,255$. Other choices are possible, for example to upsample, downsample or extend the original image.

The bitstream encoding a signal is thus created by encoding the parameters of the neural network. This is typically done by a neural compression codec such as Neural Network Coding (NNC)/ ISO/IEC 15938-17 or MPEG-7 part 17 or simply by quantizing the parameters and/or pruning some neurons from the network and using conventional entropy coding such as arithmetic coding or auto-regressive models.

Using INR networks for the application of encoding and decoding images is further described with respect to FIGS. 3 and 4.

**FIG. 3** is a block diagram of an example video encoder. In the example of FIG. 3, the video encoder 300 includes an INR-based encoder 320, a quantizer 330, and an entropy-based encoder 340. The INR-based encoder 320 receives an input data 310 to be coded. The input data 310 can be data associated with a frame of video (an image), a frame of a surface representation of an object, or a frame of volumetric data. To code the input data 310, the INR-based encoder 320 trains an INR network (e.g., the INR network 200 described herein). Specifically, based on the input data 310, the INR-based encoder 320 optimizes a cost function associated with the function $f_\theta$, representative of the INR network, to determine the optimal network parameters $\theta$. For example, for an input image with dimensions $W$ and $H$, $W$ times $H$ pairs of pixel coordinates ($i, j$) and corresponding pixel values $\boldsymbol{x}(i, j)$ can be used to train the INR network according to equation (2). The optimal parameters, generated by the INR-based encoder 320, are then quantized by the quantizer 330, and then the quantized parameters are entropy-coded, by the entropy-based encoder 340, into a bitstream 350. Alternatively, the optimal parameters, generated by the INR-based encoder 320, can be coded for example using neural compression codecs such as Neural Network Coding (NNC)/ ISO/IEC 15938-17 or MPEG-7 part 17. The bitstream 350 can be used by a decoder to reconstruct the input image 310, as described in reference to FIG. 4.

**FIG. 4** is a block diagram of an example video decoder. The decoder 400 generally reverses the operation of the encoder 300 of FIG. 3. In the example of FIG. 4, the video decoder 400 includes an entropy-based decoder 420, a dequantizer 430, and an INR-based decoder 440. As illustrated, the decoder 400 receives the bitstream 410, 350 (generated by the encoder 300) and entropy-decodes therefrom the quantized INR network parameters. The dequantizer 430 is then employed to dequantize these quantized INR network parameters, resulting in a restored version of the INR network parameters to be provided to the INR-based decoder 440.

The INR-based decoder 440 applies the trained INR network, defined by the restored INR network parameters, to generate the reconstructed data 450. For example, to decode an input image, the INR-based decoder 440 uses the INR network to predict the value of (or to evaluate $f_\theta$ using the coordinates of) any pixel of the input image. Thus, the decoder 400 can be applied to: 1) reconstruct the whole encoded image 310; 2) to reconstruct only a region of the encoded image; or 3) to progressively reconstruct the encoded image. For example, at the encoder 300, an INR network may be trained to predict pixel values of an image with dimensions $W$ = 256 by $H$ = 256 based on the corresponding coordinates. At the decoder 400, pixel values of the image can be predicted by evaluating the trained INR network using: 1) the full coordinate set used for training, including all pairs of $i \in 0,1, ...,255$ and $j \in 0,1, ...,255$; 2) a subset of the full set, including coordinates from a region of the encoded image; or 3) a first subset of the full set, including coordinates that subsample the image (forming a low-resolution version of the encoded image) and then a second subset including the remaining coordinates. Any set of coordinates can be used to predict the corresponding pixel values, for example, in order to interpolate or to extrapolate the encoded image 310.

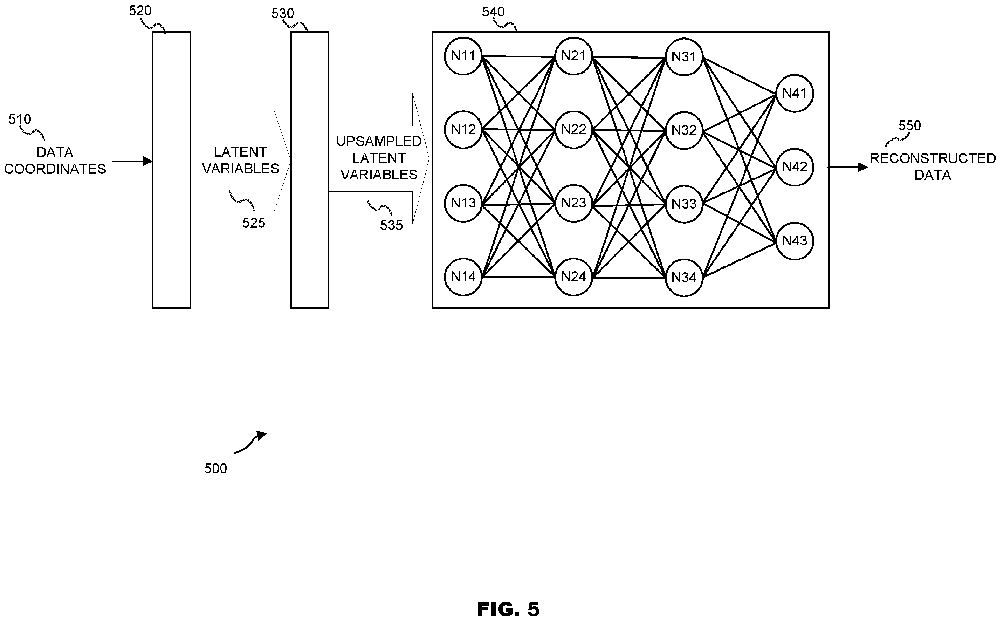

Hybrid INR networks have recently been applied to representing data, including images, videos, 3D objects, and volumetric data, among other applications. In a hybrid INR network, the data coordinates are first mapped into latent variables (or a feature vector). The latent variables are then used as input for the neural network. An example for a hybrid INR network is described in reference to FIG. 5.

**FIG. 5** is a diagram illustrating a hybrid INR network. In an aspect, this hybrid INR network 500 can be applied by the INR-based encoder 320 of FIG. 3 and the INR-based decoder 440 of FIG. 4. In the example of FIG. 5, during the encoding of input data (that is, the training of the network 500), the input data's coordinates 510 are first mapped, by a mapping unit 520, into respective latent variables 525, i.e., vector of latent features. The mapping can be implemented for example by a lookup table, a partition of the signal, a hash function and/or a linear combination of features or directly learned these features. The mapping may also involve any transformation, such as a Fourier transformation, a coordinate transformation, a normalization transformation, or a combination thereof. The latent variables 525 may have different resolutions and may need to be upsampled, for example by an up-sampling unit 530, resulting in upsampled latent variables 535. The upsampled latent variables are used as an input to an INR synthesis network 540 (e.g., such as INR network 200), trained to produce the reconstructed data 550. In a hybrid INR network 500 the latent variables 525 are trained together with the parameters $\theta$ of the INR network 540, resulting in optimal network parameters and optimal latent variables. Using such an architecture helps in handling the local attributes of the input data. Indeed, a group of latent variables that correspond to a given part of the data may be uncorrelated with other groups of latent variables that correspond to other parts of the data, and, thus, groups of latent variables can be tailored to (or be characteristic of) corresponding parts of the data.

Following the training of the hybrid INR network 500 (e.g., by the encoder 320), the learned latent variables 525 and network parameters are quantized (e.g., by the quantizer 330) and coded (e.g., by the entropy-based encoder 340) into the bitstream. Thus, during inference, first the latent variable 525 and the network parameters of the trained INR network 540 are decoded (e.g., by the entropy-based decoder 420) from the bitstream and dequantized (e.g., by the dequantizer 430). Then, the decoded and dequantized latent variables are up-sampled 530. To reconstruct the data 550, the up-sampled latent variables are fed into the trained INR network 540 using the decoded and dequantized network parameters of the INR network.

In hybrid INR networks, the latent variables, denoted by $y$, are typically the largest contributor to the bitstream size (several orders of magnitude larger than that contributed by the INR network parameters). One approach to reduce the transmission cost of these latent variables is to entropy code these variables based on their learned distributions.

The attention given to the entropy coding of the latent features appears on the new formulation of the loss function:

$$\min_{(\hat{y},\theta,\psi)} D\left(x, f_\theta\left(\mathrm{upsample}(\hat{y})\right)\right) - \lambda \log_2 p_\psi(\hat{y}), \qquad (4)$$

where $\hat{y}$ is the quantized latent and $p_\psi(\hat{y})$ is the discrete distribution over the quantized latent features. The distribution of these latent features can for example be a known distribution or estimated using an auto regressive probability model.

According to Equation (4), minimizing the rate associated to the transmission of the compressed version of the frame relies on minimizing the rate associated to the latent features. This can be achieved by reducing the amount of information contained in the latent features risking a poor reconstruction of the sent frame and an increase of distortion in $\hat{x}=f_\theta$ ("upsample" $(\hat{y})$). In other words, less information in $\hat{y}$ results in more distortion in $\hat{x}$. It may also be achieved by estimating the distribution of the sent latent as close as possible to the real (unknown) one using a well-chosen probability model. If that probability model is trained, it must be included in the bitstream.

Due to its high dimension the modeling of the joint distribution of $\hat{y}$ is usually untrackable. Instead it is typical to factorize $p_\psi(\hat{y})$ and use a set of C context latents $c_{ijk}^s$ such that the distribution of each quantized latent $\widehat{y_{ijk}}$ is conditioned on C spatially neighboring latents that have already been decoded and selected in a way to introduce as little sequentiality as possible to allow parallel decoding of the L channels, for example in a wavefront-like approach. The position of the latent considered must be known by the emitter and the receiver. The factorization of $p_\psi(\hat{y})$ is given by:

$$p_\psi(\hat{y}) = \prod_{i,j,k} p_\psi(\widehat{y_{ijk}} | c_{ijk}^s),$$

Where $p_\psi(\widehat{y_{ijk}} | c_{ijk}^s)$ denotes the conditional probability of one latent value at position (i, j, k) conditioned on its spatial context $c_{ijk}^s$. (i, j) represents the spatial coordinate and k represents a latent feature.

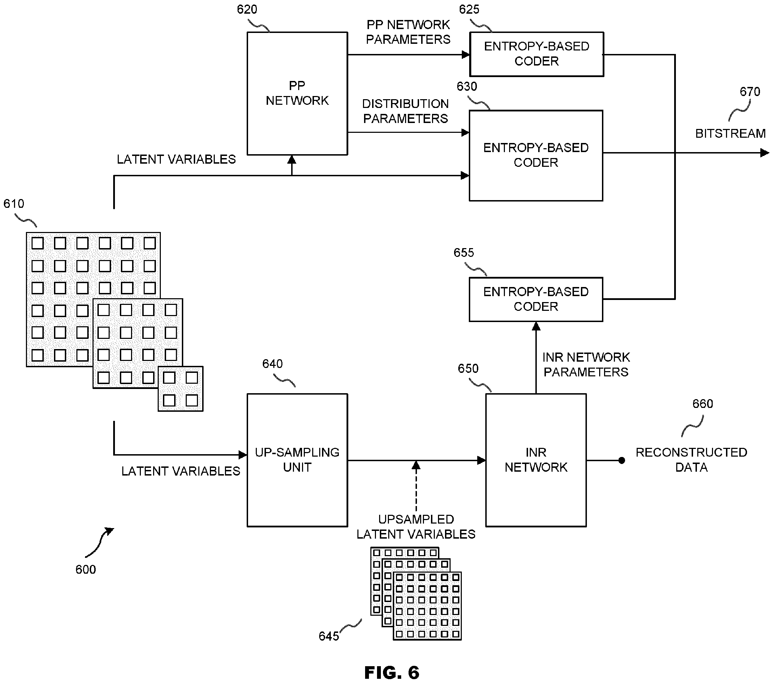

An example of hybrid INR network named a coordinate-based low complexity hierarchical image codec (COOL-CHIC), was proposed by Ladune et al. (see, Ladune et al., "COOL-CHIC: Coordinate-based low complexity hierarchical image codec," International Conference on Computer Vision (ICCV), 2023, hereinafter "Ladune"). In Ladune, the latent variables are arranged in hierarchical layers (or channels) ranging from a low-resolution representation (that provides for compact representation of smooth image regions) to a high-resolution representation (that captures the fine details of the image). Principles of the hybrid INR network proposed in Ladune are described below in reference to FIGS. 6-7.

**FIG. 6** is a block diagram illustrating an example video encoder 600 applying a hybrid INR network based on COOL-CHIC. The encoder 600 includes a probability prediction (PP) network 620, an up-sampling unit 640, an INR network 650, and entropy-based coders 625, 630, 655. The encoder 600 is configured to process latent variables 610 (e.g., latent variables 525 generated by the mapping unit 520 of FIG. 5). The encoder 600 up-samples, by the up-sampling unit 640, the latent variables. Based on these upsampled latent variables 645 the INR network 650 is trained (overfitted) to produce reconstructed data 660 (e.g., a reconstructed image of a video frame). The training results in optimal INR network parameters $\theta$ that are coded, by the entropy-based coder 655, into the bitstream 670. In an inference mode, reconstructing the data (e.g., by a decoder 700) involves feeding the trained INR network, defined by the optimal network parameters $\theta$, with the upsampled latent variable. And so, in addition to the network parameters $\theta$, the latent variables need to be coded into the bitstream 670. As further explained below, due to their large bit representation, efficient coding of the latent variables calls for the estimation of their distributions. To that end, the encoder 600 can be further configured to learn the distributions of respective latent variables using the PP network 620 - that is, a network trained to produce parameters of distributions of respective latent variables. Based on these learned distribution parameters the entropy-based coder 630 codes the latent variables into the bitstream 670. The PP network is defined by PP network parameters, denoted by $\psi$, determined during the training of the PP network 620. The entropy-based coder 625 codes these PP network parameters into the bitstream 670. Note that in the example of FIG. 6, while the entropy-based coder 630 that codes the latent variables relies on their learned respective distributions, the other entropy-based coders 625, 655 that code the PP network parameters and the INR network parameters rely on respective non-learned distributions. In an aspect, for some of the latent variables respective non-learned distributions can be used by the entropy-based coder 630. These non-learned distributions may be fixed distributions or may be distributions that was learned with respect to other latent variables (e.g., latent variables representing data from previous frames).

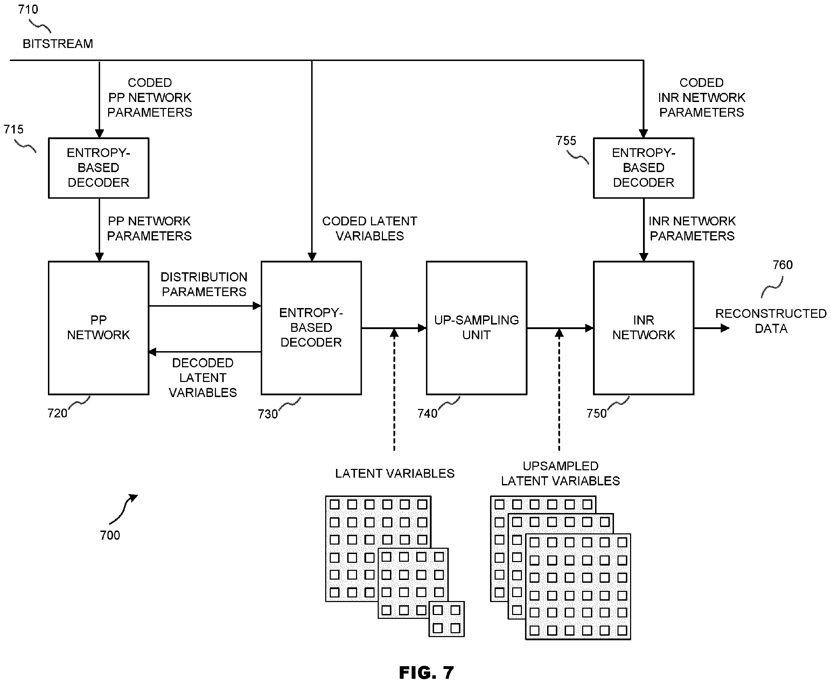

**FIG. 7** is a block diagram illustrating an example video decoder applying a hybrid INR network based on COOL-CHIC. The decoder 700 includes a PP network 720, an up-sampling unit 740, an INR network 750, and entropy-based decoders 715, 730, 755. The PP network 720 produces distribution parameters of respective latent variables. The PP network 720 operates based on learned PP network parameters $\psi$, determined during the training of the PP network 620. The entropy-based decoder 715 decodes these PP network parameters from the bitstream 710. Based on the produced 720 distribution parameters, the entropy-based decoder 730 decodes the latent variables from the bitstream 710. Already decoded latent variables are provided back to PP network to serve as a context in producing the distribution parameters of the currently decoded latent variable. The decoded latent variables are then upsampled by the up-sampling unit 740 (as performed by the up-sampling unit 640 at the encoder 600). Fed by the up-sampled latent variables, the INR network 750 reconstructs the data 760 (e.g., a reconstructed image of a video frame) it is trained to synthesize based on the INR network parameters, decoded from the bitstream 710 by the entropy-based decoder 755.

The operation of the hybrid INR network is further explained with respect to an image *x* of a video frame, however, *x* may represent other types of data (such as a surface or a volume) that can be associated with a frame. Note that latent variables representative of data regions (e.g., pixels) from a data frame (e.g., a video frame) referred to herein also as corresponding to that data frame.

As illustrated, the INR network 650, 750 utilizes a hierarchical representation that includes multiple layers of different spatial resolutions 610. Each layer represents an image *x* with a width *W* and a height *H* with a corresponding level of detail. Formally, the discrete latent variables, denoted by $\hat{y}$, can include *K* layers of latent variables: $\hat{y} = \{\hat{y}_k, k = 0: (K-1)\}$. Each layer $\hat{y}_k$ is of width $W/2^k$ and of height $H/2^k$. During the up-sampling 640, each layer $\hat{y}_k$ may be upsampled by a factor of $2^k$ (using any interpolation method) to obtain the upsampled layer version, denoted by $\hat{z}_k$. Together, the upsampled layers, $\hat{z} = \{\hat{z}_k, k = 0: (K-1)\}$, result in a dense 3D representation 645 of dimension *W* by *H* by *K*. Thus, the INR network 650 can be trained based on *W* by *H* inputs of $\hat{z}(i, j)$, where each input can include up to *K* latent variables, that is, $\hat{z}(i, j) = \{\hat{z}(i, j, k), k = 0: (K-1))\}$. For example, the trained INR network 750 can be used to predict a reconstructed pixel $\hat{x}(i, j)$, of the original pixel $x(i,j)$, by $\hat{x}(i,j) = f_\theta(\hat{z}(i,j))$. In an aspect, depending on the desired bitrate, not all the layers of the latent variables may be used to represent (code) an image **x.**

When compressing an image **x** the goal is to do so while minimizing a cost function, as discussed with respect to equation (2). In the case of a hybrid INR network, the cost of coding an image can be expressed as:

$$Cost = D(\boldsymbol{x}, f_{\boldsymbol{\theta}}(\hat{z})) + \lambda R(\hat{y}, \theta, \psi), \qquad (4)$$

where **x** denotes an image to be coded with $H$ hight, $W$ width, and $V$ color channels; where $\hat{y}$ denotes the quantized latent variables and $\hat{z}$ denotes their upsampled version; where $f_\theta$ denotes the INR network 650, 750 and $\theta$ denotes the INR network parameters; where $f_\psi$ denotes the PP network 620, 720 and $\psi$ denotes the PP network parameters; where $D$ denotes a distortion metric measuring the distance between the image **x** and its reconstructed version $\hat{x}$, as produced by the INR network $f_\theta$ from the upsampled latent variables $\hat{z}$, that is, $\hat{x} = f_\theta(\hat{z})$; and where $R$ denotes the rate (in bits per pixel) measuring the number of bits that are required to represent a pixel in a bitstream, that is, the number of bits that are required to represent $\hat{y}, \theta$, and $\psi$. The distortion $D$ and the rate $R$ are balanced by a scalar value denoted by $\lambda$. In a case where the up-sampling unit 640 is implemented by a neural network, the parameters of that network are also learned and coded into the bitstream 670 to be used by the up-sampling unit 740 when used in an inference mode.

The objective, thus, is to find the latent variables $\hat{y}$, the INR network parameters $\theta$, and the PP network parameters $\psi$ that minimize the coding cost, as follows:

$$\min_{\hat{y},\theta,\psi} Cost = \min_{\hat{y},\theta,\psi} \left( D(x, f_{\boldsymbol{\theta}}(\hat{z})) + \lambda R(\hat{y}, \theta, \psi) \right). \qquad (5)$$

Since the contribution of the INR network parameters $\theta$ and the PP network parameters $\psi$ to the rate $R$ is not as significant as that of the latent variables $\hat{y}$, only the latter can be considered when minimizing the coding cost, that is, $R(\hat{y}, \theta, \psi) \approx R(\hat{y})$. Furthermore, $R(\hat{y})$ can be replaced by the cross entropy. Thus, equation (5) can be replaced by:

$$\min_{\hat{y},\theta,\psi} Cost = \min_{\hat{y},\theta,\psi}(D(x, f_{\boldsymbol{\theta}}(\hat{z})) - \lambda \log_2 P_\psi(\hat{y})), \qquad (6)$$

where $P_\psi(\hat{y})$ is the joint distribution of the latent variables $\hat{y}$. According to Equation (6), minimizing the cost involves minimizing the rate associated with the latent variables. This can be achieved by reducing the amount of information contained in the latent variables, at the price of a less accurate reconstruction, as less information in $\hat{y}$ is likely to increase the distortion $D$. Alternatively, minimizing the cost can be achieved by obtaining estimates of the distributions of the respective latent variables, as described herein.

Due to the high dimensionality of the latent variables, modeling of the joint distribution of $\hat{y}$, $P_\psi(\hat{y})$, is not tractable. Instead, $P_\psi(\hat{y})$ can be factorized as follows:

$$P_\psi(\hat{y}) = \prod_{i,j,k} p_\psi(\hat{y}_{ijk} | c_{ijk}^s), \qquad (7)$$

where $p_\psi(\hat{y}_{ijk} | c_{ijk}^s)$ denotes a discrete conditional probability of a latent variable at position (i, j, k) conditioned on a corresponding spatial context $c_{ijk}^s$. Where (i, j) represents the spatial coordinate of a latent variable in a layer $k$. The spatial context $c_{ijk}^s$ may be provided by spatially neighboring latent variables that have already been decoded, and preferably selected in a way that enables parallel decoding of the different layers of the latent variables (e.g., in a wavefront-like approach).

In practice, the discrete distribution $p_\psi(\hat{y}_{ijk} | c_{ijk}^s)$ can be modeled by integrating the continuous distribution of the non-quantized latent variable, denoted by $g(y)$ and modeled as a Laplacian distribution, for example. Thus, the PP network 620 learns the expectation parameter, $\mu_{ijk}$, and the scale parameter, $\sigma_{ijk}$, based on the context $c_{ijk}^s$. Accordingly, the probability of a latent variable $\hat{y}_{ijk}$ can be expressed as:

$$p_\psi(\hat{y}_{ijk} | c_{ijk}) = \int_{\hat{y}_{ijk}-0.5}^{\hat{y}_{ijk}+0.5} g(y) dy, \qquad (8)$$

where g $\cong \mathcal{L}$ ($\mu_{ijk}$, $\sigma_{ijk}$) denotes a Laplacian distribution. Thus, in the case of a Laplacian distribution, for example, given a context $c_{ijk}$, the PP network 620 can be trained to produce the corresponding distribution parameters, that is, {$\mu_{ijk}$, $\sigma_{ijk}$} = $f_\psi$ ($c_{ijk}$).

Embodiments described hereafter have been designed with the foregoing in mind and propose a hybrid INR network wherein the ground truth images are decomposed using Gaussian pyramid to generate the output images at different resolutions, making it possible to learn one synthesis network per resolution for example. In addition, the reconstruction process is performed in a coarse to fine manner, i.e. from the lowest to the highest resolution. This may improve the quality of the reconstructed images.

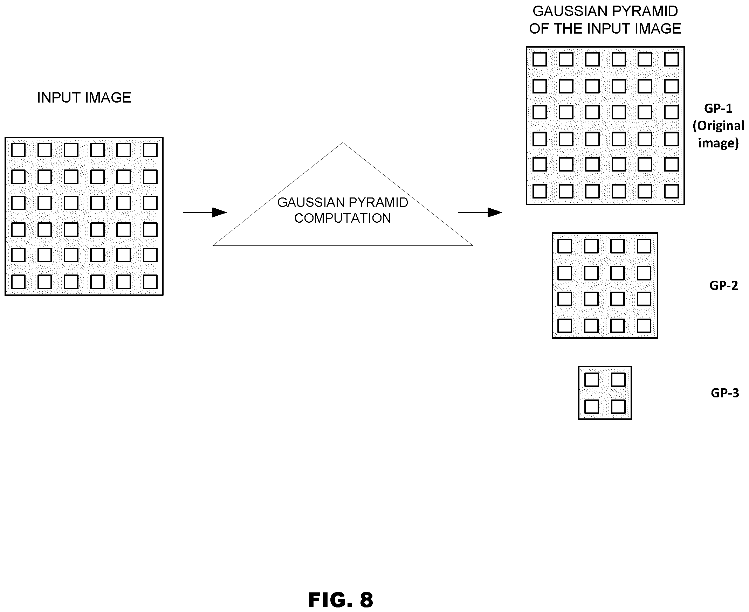

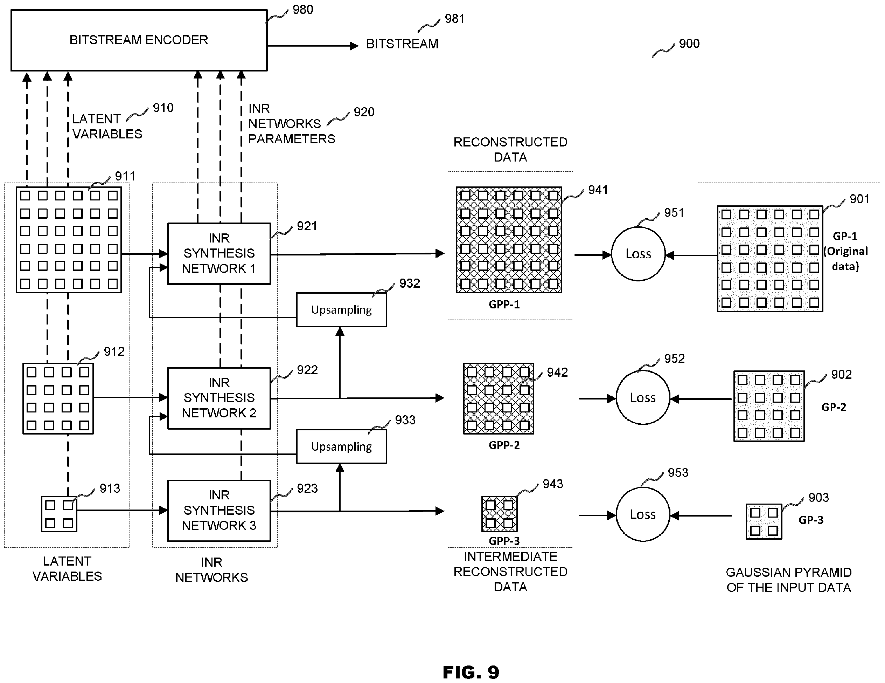

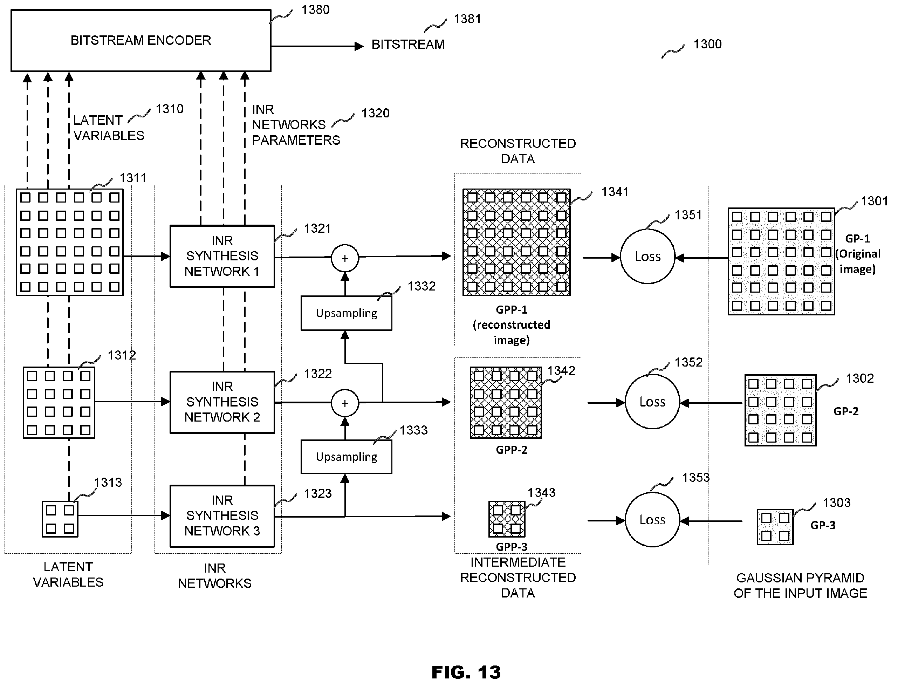

FIG. 8 is a diagram illustrating the decomposition of the input image into multiple hierarchical decompositions using Gaussian Pyramid according to at least one embodiment. *F* being an image frame to be encoded, the image *F* is decomposed into multiple hierarchical decomposition $GP_3$, $GP_2$, $GP_1$ using Gaussian Pyramid. In this figure and the following figures, for the sake of readability of the drawings, an arbitrary number of three levels have been chosen to illustrate the proposed principles. In a more practical implementation, the number of levels is much higher, for example any number of levels between four and sixteen or even higher. A tradeoff may be chosen between the quality of the reconstruction and the computation resources required for the training process, reconstruction process and the quantity of parameters to be encoded. In the example using three levels, the $GP_3$ is the lowest resolution; the highest level represents the current frame ($GP_1 = F$). The advantage of such a decomposition is that the frame content is separated into different levels so that it can be learnt separately or learnt in a hierarchical manner. This Gaussian pyramid is used to drive the training phase as described with reference to FIG. 9 and FIG. 13.

Hybrid-INR methods such as those described with reference to FIG. 6 and FIG. 7 are based on multi-resolution latent grids, autoregressive entropy model, upsampling layer, and synthesis network. Embodiments herein propose a Hybrid-INR network using Gaussian Pyramid where the number of decomposition levels is fixed and the number of multi-resolution latent grids is selected accordingly.

The embodiments are described herein using an image as data to encode and decode. However, the architecture and methods apply similarly to other types of data such as 3D scenes, 3D objects, haptic textures, or other types of data.

FIG. 9 illustrates an example architecture of an encoder based on a hybrid INR network using a gaussian pyramid decomposition according to a first embodiment. In such embodiment, the input of synthesis networks is conditioned by the result of the previous level. This approach can be referred to as a coarse to fine approach. This is done using a plurality of levels for the latent variables as well as for the INR networks, decomposed in a number *K* of decomposition levels using Gaussian Predicted Pyramid (GPP). In the figures and the description, GPP-1 corresponds to the first level of the predicted Gaussian pyramid, {$y_1$, ..., $y_K$} represents the *K* level of latent grids, and each level of latent grid corresponds to the decomposition level of a given frequency range. For each level, a separate synthesis network predicts the particular level of a Gaussian pyramid, thus {$S_1$, .... $S_K$} be the *K* synthesis networks. For a given level *k*, the synthesis network $S_k$ takes as input the output of the previous level $GPP_{k-1}$ as well as the latent level $LL_k$. Mathematically, this boils down to:

$$GPP_k = S_k \left( \varphi(LL_k, \uparrow (GPP_{k-1} )) \right)$$

where $\varphi$ is the concatenation operator, and $\uparrow$ is an upsampling operator in order to upsample the previous predicted Gaussian level. The synthesis network is a classic convolutional network.

The architecture of the encoder is based on a set of INR networks (921, 922, 923) and a set of latent variables (911, 912, 913). The INR networks are trained to minimize losses (951, 952, 953) between reconstructed data (941, 942, 943) and decompositions of the input data into different levels (901, 902, 903). For the lowest level the INR network of the lowest level is trained with latent variables of the lowest level based on a difference between data of the lowest level and a reconstructed data of the lowest level. For the INR networks of the levels higher than the lowest level, an upsampled (932, 933) version of the reconstructed data of a lower level is concatenated to the latent variables of a level and provided as input to the INR network of the level. When the training is completed, the latent variables (910) of all the levels and the parameters (920) of all the INR networks are encoded (980) to generate a bitstream (981). The encoder is for example one or more entropy-based encoders that may be fed through a quantization step. Any other type of encoder can be used as mentioned above.

Several elements of the system (latent variables, INR networks, reconstructed data, input data) are arranged in a hierarchical manner, based on a gaussian pyramid decomposition as introduced with reference to FIG.8. In this context, the term "lowest level" should be understood as the bottom level of the hierarchy (903, 913, 923, 943) while the term "lower level" should be understood as the level directly below a current level in the hierarchy of levels. Indeed, the processes of the embodiments are comprising iterations over the levels and in some cases, a current level may require elements from a lower level (e.g.: upsampled data 933 of level 3 for the INR Network 922 of level 2).

The loss (951, 952, 953) is a function that allows to measure a similarity or difference between data and may be formulated as follows:

$$\mathcal{L} = D + \lambda \times R$$

where D and $R$ represent the distortion and the rate respectively. The rate is computed similarly as with the COOLCHIC solution. The distortion is computed as follows:

$$D = \sum_{k=1}^{K} d(GP_k, GPP_k)$$

where $d$ represents a distortion metric, such L1 or L2, Mean Squared Error. When the embodiment is applied to images or video data, conventional image similarity functions may be used for this function such as learned perceptual image patch similarity (LPIPS) proposed in Zhang, Richard, et al. "The unreasonable effectiveness of deep features as a perceptual metric." Proceedings of the IEEE conference on computer vision and pattern recognition, 2018, or the structural similarity index measure (SSIM) proposed in Wang, Zhou, et al. "Image quality assessment: from error visibility to structural similarity." IEEE transactions on image processing 13.4 (2004): 600-612.

The bitstream 981 generated by the encoder 900, and more particularly by the (entropic) bitstream encoder 980 comprises:

- parameters of the autoregressive model: this may be done by a neural compression codec such as Neural Network Coding (NNC)/ ISO/IEC 15938-17 or MPEG-7 part 17 or simply by quantizing the weights and/or pruning some neurons from the network or by fixed bit representations (e.g. 16 bits),
- Latent grids encoded using the autoregressive model, as described with reference to FIG. 6 and FIG. 7,
- The parameters of the synthesis blocks: This may be done by a neural compression codec such as Neural Network Coding (NNC)/ ISO/IEC 15938-17 or MPEG-7 part 17 or simply by quantizing the weights and/or pruning some neurons from the network or by fixed bit representations (e.g. 16 bits), and

- The number $K$ of levels of the gaussian pyramid.

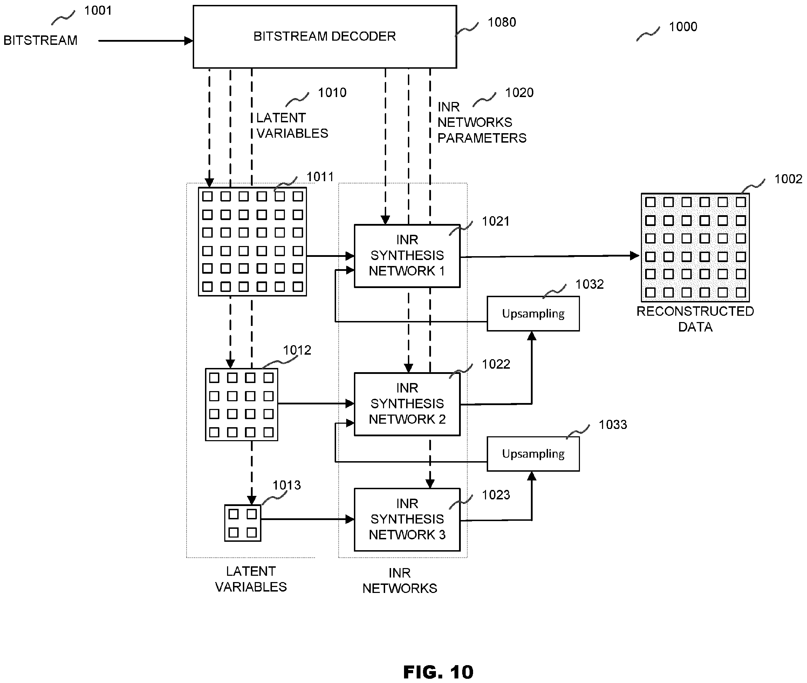

FIG. 10 illustrates an example architecture of a decoder based on a hybrid INR network using a gaussian pyramid decomposition according to the first embodiment. Similarly to the encoder, the architecture of the decoder (1000) is based on a set of INR networks of a plurality of levels (1021, 1022, 1023) and a set of latent variables of a plurality of levels (1011, 1012, 1013). The decoder (1000) obtains a bitstream (1001) that may be generated by an encoder such as the encoder (900) of figure 9. The latent variables (1010) of all the levels and the parameters (1020) of all the INR networks are decoded from the bitstream by a bitstream decoder (1080). The parameters (1020) are first used to configure the INR networks. The INR network of the lowest level generates a reconstructed image of the lowest level, based on the latent variables of the lowest level. Iterations are then performed over the subsequent levels higher than the lowest level. For each current level higher than the lowest level, the INR network of the current level generates a reconstructed image of the subsequent level, based on a concatenation of the latent variables of the subsequent level with an up-sampled version (1032, 1033) of the lower level. The reconstructed data (1002) is the output of INR network of highest-level and may be provided as output of the decoder.

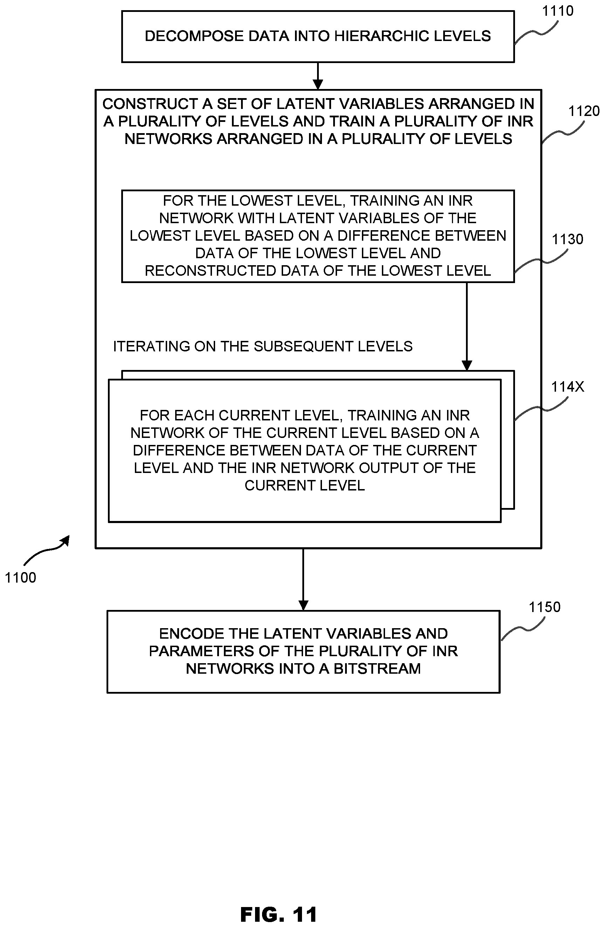

FIG. 11 illustrates an example process for encoding data based on a hybrid INR network using a gaussian pyramid decomposition according to the first embodiment. The process 1100 is for example implemented by a processor 110 of a device 1000 of figure 1 or an encoder 900 of FIG. 9. In step 1110, the processor decomposes the data to be encoded into a plurality of hierarchical levels using a Gaussian Pyramid decomposition. In step 1120, the processor constructs a set of latent variables arranged in a plurality of levels and trains a plurality of INR networks arranged in a plurality of levels. In step 1130, for the lowest level, the processor trains an INR network with latent variables of the lowest level based on a difference between data of the lowest level and a reconstructed data of the lowest level. In an iterative process on the plurality of subsequent levels higher than the lowest level, in ascendant order from low to high level, in steps 114X, for each current level, the processor trains an INR network of the current level based on a difference between data of the current level and the INR output of the current level, where the input of the INR network of the current level is a concatenation of an upscaled reconstructed data of the lower level (i.e. the output of the INR network of the lower level) and latent variables of the current level. The training is based on a loss function measuring a difference between data and reconstructed data for a given level of the hierarchical levels. Once all levels have been trained, in step 1150, the processor encodes the set of latent variables and the parameters of the plurality of INR networks into a bitstream.

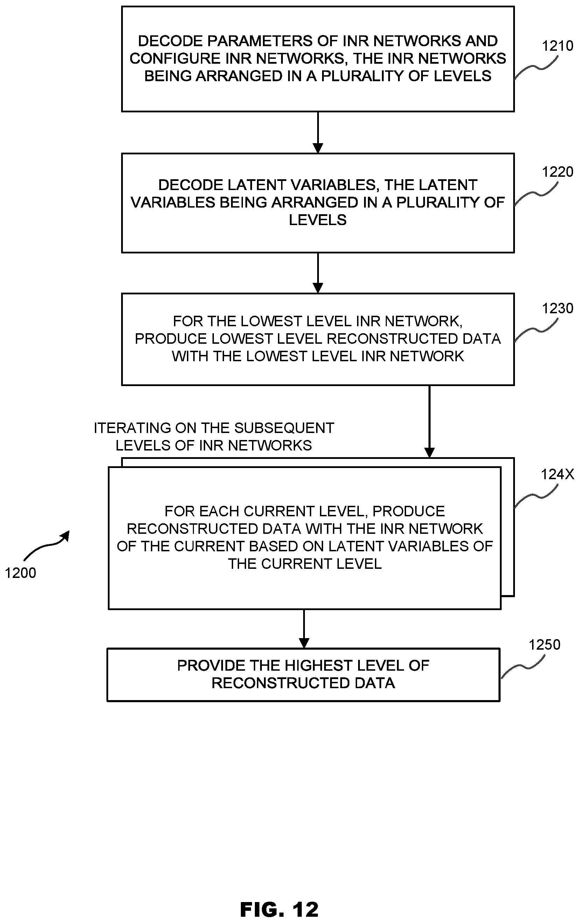

FIG.12 illustrates an example process for decoding data based on a hybrid INR network using a gaussian pyramid decomposition according to the first embodiment. The process 1200 is for example implemented by a processor 110 of a device 1000 of figure 1 or a decoder 1000 of FIG. 10. In step 1210, the processor decodes parameters of a plurality of INR networks, the INR networks being arranged in a plurality of levels as described above. The processor configures the plurality of INR networks according to the obtained parameters. In step 1220, the processor decodes latent variables, the latent variables being arranged in a plurality of levels as described above. In step 1230, for the lowest level, the processor produces a reconstructed data with the INR network of the lowest level having as input the latent variables of the lowest level. In an iterative process on the plurality of subsequent levels higher than the lowest level, in ascendant order from low to high level, in steps 124X, for each current level, the processor produces reconstructed data with the INR network of the current level, having as input a concatenation of latent variables of the current level with an upscaled reconstructed data of the lower level. Once all levels have been processed, in step 1250, the processor provides the reconstructed data of the highest level.

**FIG.13** illustrates an example architecture of an encoder based on hybrid INR network using a gaussian pyramid decomposition according to a second embodiment. Such embodiment proposes an architecture that limits the number of computations in the synthesis network, in other words, the decoding process requires less operations to reconstruct an image than with the first embodiment. For a given level $k$, the synthesis network $S_k$ takes as input the latent level $LL_k$. The output of the synthesis network is then combined with the previous level $GPP_{k-1}$. Mathematically, this boils down to:

$$GPP_k = S_k(LL_k) + \uparrow (GPP_{k-1})$$

where $\uparrow$ is an upsampling operator in order to upsample the previous predicted Gaussian level. The synthesis network is a classic convolutional network. In this method, except for the lowest resolution, the synthesis network aims to recover the missing information, i.e. the details or the high frequencies.

The architecture of the encoder 1300 is similar to the encoder of the first embodiment but introduces some differences in the coarse to fine approach to reduce the number of computations. It is based on a set of INR networks (1321, 1322, 1323) and a set of latent variables (1311, 1312, 1313). The INR networks are trained to minimize losses (1351, 1352, 1353) between reconstructed data (1341, 1342, 1343), for example images, and decompositions of the input data into different levels (1301, 1302, 1303). For the lowest level, the INR network of the lowest level is trained with latent variables of the lowest level based on a difference between data of the lowest level and a reconstructed data of the lowest level. An iteration is performed on the INR networks of the subsequent levels higher than the lowest level. For each current level, the latent variables of the current level are provided as input to the INR network of the current level and the output by the INR network of the current level is added to an upsampled version (1332, 1333) of the reconstructed data of the lower level to reconstruct the date of the current level (1341, 1342). When the training is completed, the latent variables (1310) of all the levels and the parameters (1320) of all the INR networks are encoded (1380) to generate a bitstream (1381). The bitstream encoder (1380) is for example one or more entropy-based encoders that may be fed through a quantization step. Any other type of encoder can be used as mentioned above.

The method for encoding data according to the second embodiment is nearly identical to the encoding method (1100 of FIG.11) according to the first embodiment. The difference relies on the inputs of the INR networks, that are simply the latent variables, and on the reconstruction of the data that is done by adding upsampled reconstructed data of the lower level to the output of the INR network for the levels higher than the lowest level.

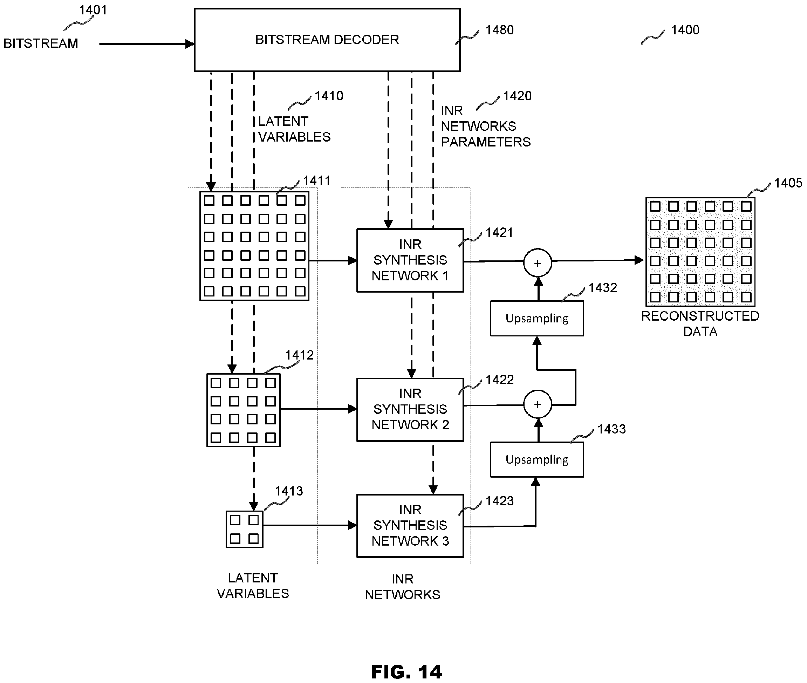

**FIG. 14** illustrates an example architecture of a decoder based on a hybrid INR network using a gaussian pyramid decomposition according to the second embodiment. The architecture of the decoder is similar to the encoder of the first embodiment but introduces some differences in the coarse to fine approach. Similarly to the encoder, the architecture of the decoder (1400) is based on a set of INR networks of a plurality of levels (1421, 1422, 1423) and a set of latent variables of a plurality of levels (1411, 1412, 1413). The decoder (1400) obtains a bitstream (1401) that may be generated by an encoder such as the encoder (1300) of figure 13. The latent variables (1410) of all the levels and the parameters (1420) of all the INR networks are decoded from the bitstream by a bitstream decoder (1480). The INR networks parameters (1420) are first used to configure the INR networks (1421, 1422, 1423) so that the reconstruction process can be performed. The INR network of the lowest level (1423) generates a reconstructed image of the lowest level, based on the latent variables of the lowest level (1413). Iterations are then performed over the subsequent levels higher than the lowest level. For each of the current levels higher than the lowest level, the INR network (1421, 1422) of the current level generates a reconstructed image of the current level, based on the latent variables (1411, 1412) of the current level. The result is added with an up-sampled version (1432, 1433) of the lower level. The reconstructed data (1405) is the output of INR network of highest-level added with an up-sampled version (1432) of the preceding level.

The method for decoding data according to the second embodiment is nearly identical to the encoding method (1200 of FIG.12) according to the first embodiment. The difference relies on the inputs of the INR networks, that are simply the latent variables, and on the reconstruction of the data that is done by adding upsampled reconstructed data of the lower level to the output of the INR network for the levels higher than the lowest level.

A third embodiment is proposed and combines the first and second embodiments. For a given level $k$, the synthesis network $S_k$ takes as input the output of the previous level $GPP_{k-1}$ as well as the latent level $LL_k$. Mathematically,

this boils down to:

$$GPP_k = S_k\left(\varphi(LL_k, \uparrow(GPP_{k-1}))\right) + \uparrow(GPP_{k-1})$$

where $\varphi$ is the concatenation operator, and $\uparrow$ is an upsampling operator in order to upsample the previous predicted Gaussian level.

The embodiments proposed above have multiple advantages over more conventional solutions such as the COOLCHIC solution. The final frame is reconstructed in a coarse to fine manner, in which information is propagated from the lowest to the highest level. The synthesis networks are all linked together leveraging the information contained in the different latents. In such embodiments, the goal of latent is clearly to represent a frequency range. The lowest latent aims to represent the lowest frequency range, such as in the Gaussian pyramid. Other latents aim to represent the frequencies / details required to increase the resolution. In addition, as a result of the decoding process, different resolutions are available at the decoder that can choose to provide either the full resolution image or a reduced resolution image.

The illustrations of the aspects described herein are intended to provide a general understanding of the structure, function, and operation of the various aspects. The illustrations are not intended to serve as a complete description of all of the elements and features of apparatuses and systems that utilize the structures or methods described herein. Many other aspects may be apparent to those of skill in the art upon reviewing the disclosure. Other aspects may be utilized and derived from the disclosure, such that structural and logical substitutions and changes may be made without departing from the scope of the disclosure. Accordingly, the disclosure and the figures are to be regarded as illustrative rather than restrictive.

The description of the aspects is provided to enable the making or use of the aspects. Various modifications to these aspects will be readily apparent, and the generic principles defined herein may be applied to other aspects without departing from the scope of the disclosure. Thus, the present disclosure is not intended to be limited to the aspects shown herein but is to be accorded the widest scope possible consistent with the principles and novel features as defined by the following claims.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "map", "frame", "slice" and "tiles" may be used interchangeably. Usually, but not necessarily, the term "reconstructed" is used at the encoder side while "decoded" is used at the decoder side. The term compressed represents the result of an encoding step followed by a decoding step.

In the present application, the terms "INR network synthesis" and "INR Network" may be used interchangeably.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types.

**Claims**

1. An encoding method comprising:

   decomposing data into hierarchic levels,
   constructing a set of latent variables arranged in a plurality of hierarchic levels and train a plurality of implicit neural representation (INR) networks arranged in a plurality of hierarchic levels, by:

      for the lowest level, training an INR network with latent variables of the lowest level based on a difference between data of the lowest level and reconstructed data of the lowest level, and
      iterating on subsequent levels of the hierarchy and for each current level, training an INR network of the current level based on a difference between data of the current level and reconstructed data output by the INR network, wherein the input of the INR is a concatenation of an upscaled reconstructed data of the lower level and latent variables of the current level,

   encoding the latent variables of the plurality of levels and parameters of the plurality of INR networks parameters into a bitstream,

   wherein the number of levels of the latent variables is identical to the number of levels of the plurality of INR networks.

2. A decoding method comprising:

decoding parameters of a plurality of implicit neural representation (INR) networks, the INR networks being arranged in a plurality of hierarchic levels,

configuring the INR networks based on the decoded parameters,

decoding latent variables, the latent variables being arranged in a plurality of hierarchic levels,

for the lowest level INR network, producing lowest level reconstructed data with the lowest level INR network having as input the lowest level of latent variables,

iterating on the subsequent levels of the hierarchy of INR networks and for each current level, producing reconstructed data with the INR network of the current level having as input a concatenation of latent variables of the current level with an upscaled reconstructed data of the lower level,

providing the output of the INR network of highest level as reconstructed data,

wherein the number of levels of the latent variables is identical to the number of levels of the plurality of INR networks.

3. An encoding method comprising:

decomposing data into hierarchic levels,

constructing a set of latent variables arranged in a plurality of hierarchic levels and train a plurality of implicit neural representation (INR) networks arranged in a plurality of hierarchic levels, by:

for the lowest level, training an INR network with latent variables of the lowest level based on a difference between data of the lowest level and reconstructed data of the lowest level, and

iterating on subsequent levels of the hierarchy and for each current level, training an INR network of the current level based on a difference between data of the current level and an addition of reconstructed data output by the INR network to an upscaled reconstructed data of the lower level, wherein the input of the INR network is the latent variables of the current level,

encoding the latent variables of the plurality of levels and parameters of the plurality of INR networks parameters into a bitstream,

wherein the number of levels of the latent variables is identical to the number of levels of the plurality of INR networks.

4. A decoding method comprising:

decoding parameters of a plurality of implicit neural representation (INR) networks, the INR networks being arranged in a plurality of hierarchic levels,

configuring the INR networks based on the decoded parameters,

decoding latent variables, the latent variables being arranged in a plurality of hierarchic levels,

for the lowest level INR network, producing lowest level reconstructed data with the lowest level INR network having as input the lowest level of latent variables,

iterating on the subsequent levels of the hierarchy of INR networks and for each current level, producing reconstructed data as an addition of an output of the INR network of the current level having as input the latent variables of the current level to an upscaled reconstructed data of the lower level,

providing an addition of the output of the INR network of the highest level to an upscaled reconstructed data of the preceding level as reconstructed data,

wherein the number of levels of the latent variables is identical to the number of levels of the plurality of INR networks.

5. The method of any of claims 1 to 4, wherein the data is an image.

6. The method of any of claim 1 to 5, wherein the number of levels of the hierarchy of levels is comprised between three and sixteen.

7. An apparatus comprising a processor configured to:

decompose data into hierarchic levels,

construct a set of latent variables arranged in a plurality of hierarchic levels and train a plurality of implicit neural representation (INR) networks arranged in a plurality of hierarchic levels, by:

for the lowest level, train an INR network with latent variables of the lowest level based on a difference between data of the lowest level and reconstructed data of the lowest level, and

iterate on subsequent levels of the hierarchy and for each current level, train an INR network of the current level based on a difference between data of the current level and reconstructed data output by the INR network, wherein the input of the INR is a concatenation of an upscaled reconstructed data of the lower level and latent variables of the current level,

encode the latent variables of the plurality of levels and parameters of the plurality of INR networks parameters into a bitstream,

wherein the number of levels of the latent variables is identical to the number of levels of the plurality of INR networks.

8. An apparatus comprising a processor configured to:

decode parameters of a plurality of implicit neural representation (INR) networks, the INR networks being arranged in a plurality of hierarchic levels,
configure the INR networks based on the decoded parameters,
decode latent variables, the latent variables being arranged in a plurality of hierarchic levels,
for the lowest level INR network, produce lowest level reconstructed data with the lowest level INR network having as input the lowest level of latent variables,
iterate on the subsequent levels of the hierarchy of INR networks and for each current level, produce reconstructed data with the INR network of the current level having as input a concatenation of latent variables of the current level with an upscaled reconstructed data of the lower level,
provide the output of the INR network of highest level as reconstructed data,

wherein the number of levels of the latent variables is identical to the number of levels of the plurality of INR networks.

9. An apparatus comprising a processor configured to:

decompose data into hierarchic levels,
construct a set of latent variables arranged in a plurality of hierarchic levels and train a plurality of implicit neural representation (INR) networks arranged in a plurality of hierarchic levels, by:

for the lowest level, train an INR network with latent variables of the lowest level based on a difference between data of the lowest level and reconstructed data of the lowest level, and
iterate on subsequent levels of the hierarchy and for each current level, train an INR network of the current level based on a difference between data of the current level and an addition of reconstructed data output by the INR network to an upscaled reconstructed data of the lower level, wherein the input of the INR network is the latent variables of the current level,

encode the latent variables of the plurality of levels and parameters of the plurality of INR networks parameters into a bitstream,

wherein the number of levels of the latent variables is identical to the number of levels of the plurality of INR networks.

10. An apparatus comprising a processor configured to:

decode parameters of a plurality of implicit neural representation (INR) networks, the INR networks being arranged in a plurality of hierarchic levels,
configure the INR networks based on the decoded parameters,
decode latent variables, the latent variables being arranged in a plurality of hierarchic levels,
for the lowest level INR network, produce lowest level reconstructed data with the lowest level INR network having as input the lowest level of latent variables,
iterate on the subsequent levels of the hierarchy of INR networks and for each current level, produce reconstructed data as an addition of an output of the INR network of the current level having as input the latent variables of the current level to an upscaled reconstructed data of the lower level,
provide an addition of the output of the INR network of the highest level to an upscaled reconstructed data of the preceding level as reconstructed data,

wherein the number of levels of the latent variables is identical to the number of levels of the plurality of INR networks.

11. The apparatus of any of claims 7 to 10, wherein the data is an image.

12. The apparatus of any of claim 7 to 11, wherein the number of levels of the hierarchy of levels is comprised between three and sixteen.

13. A non-transitory computer readable medium storing a bitstream encoded according to the method of claim 1.

14. A computer program comprising program code instructions for implementing the method according to any of claims 1 to 6 when executed by a processor.

15. A non-transitory computer readable medium storing program code instructions for implementing the method according to any of claims 1 to 6 when executed by a processor.

**FIG. 1**

FIG. 2

EP 4 716 216 A1

INPUT DATA ~310 → [INR-BASED ENCODER ~320] → [QUANTIZER ~330] → [ENTROPY-BASED ENCODER ~340] → BITSREAM ~350

**FIG. 3**

300

BITSTREAM ~410 → [ENTROPY-BASED DECODER ~420] → [DEQUANTIZER ~430] → [INR-BASED DECODER ~440] → RECONSTRUCTED DATA ~450

**FIG. 4**

400

**FIG. 5**

EP 4 716 216 A1

**FIG. 6**

**FIG. 7**

INPUT IMAGE

GAUSSIAN PYRAMID
OF THE INPUT IMAGE

GAUSSIAN PYRAMID
COMPUTATION

GP-1
(Original
image)

GP-2

GP-3

**FIG. 8**

EP 4 716 216 A1

**FIG. 9**

EP 4 716 216 A1

**FIG. 10**

DECOMPOSE DATA INTO HIERARCHIC LEVELS — 1110

CONSTRUCT A SET OF LATENT VARIABLES ARRANGED IN A PLURALITY OF LEVELS AND TRAIN A PLURALITY OF INR NETWORKS ARRANGED IN A PLURALITY OF LEVELS — 1120

FOR THE LOWEST LEVEL, TRAINING AN INR NETWORK WITH LATENT VARIABLES OF THE LOWEST LEVEL BASED ON A DIFFERENCE BETWEEN DATA OF THE LOWEST LEVEL AND RECONSTRUCTED DATA OF THE LOWEST LEVEL — 1130

ITERATING ON THE SUBSEQUENT LEVELS

FOR EACH CURRENT LEVEL, TRAINING AN INR NETWORK OF THE CURRENT LEVEL BASED ON A DIFFERENCE BETWEEN DATA OF THE CURRENT LEVEL AND THE INR NETWORK OUTPUT OF THE CURRENT LEVEL — 114X

1100

ENCODE THE LATENT VARIABLES AND PARAMETERS OF THE PLURALITY OF INR NETWORKS INTO A BITSTREAM — 1150

**FIG. 11**

DECODE PARAMETERS OF INR NETWORKS AND
CONFIGURE INR NETWORKS, THE INR NETWORKS
BEING ARRANGED IN A PLURALITY OF LEVELS — 1210

DECODE LATENT VARIABLES, THE LATENT
VARIABLES BEING ARRANGED IN A PLURALITY OF
LEVELS — 1220

FOR THE LOWEST LEVEL INR NETWORK,
PRODUCE LOWEST LEVEL RECONSTRUCTED DATA
WITH THE LOWEST LEVEL INR NETWORK — 1230

ITERATING ON THE SUBSEQUENT
LEVELS OF INR NETWORKS

FOR EACH CURRENT LEVEL, PRODUCE
RECONSTRUCTED DATA WITH THE INR NETWORK
OF THE CURRENT BASED ON LATENT VARIABLES OF
THE CURRENT LEVEL — 124X

1200

PROVIDE THE HIGHEST LEVEL OF
RECONSTRUCTED DATA — 1250

**FIG. 12**

**FIG. 13**

**FIG. 14**

Europäisches
Patentamt

European
Patent Office

Office européen
des brevets

# EUROPEAN SEARCH REPORT

**Application Number**

EP 24 30 6560

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SARAGADAM VISHWANATH ET AL: "MINER: Multiscale Implicit Neural Representation", 28 October 2022 (2022-10-28), SPRINGER INTERNATIONAL PUBLISHING, PAGE(S) 318 - 333, XP047638227, * sections 1 and 3 * | 1-15 | INV. H04N19/59 G06N3/08 |
| Y,D | LADUNE THEO ET AL: "COOL-CHIC: Coordinate-based Low Complexity Hierarchical Image Codec", 2023 IEEE/CVF INTERNATIONAL CONFERENCE ON COMPUTER VISION (ICCV), IEEE, 1 October 2023 (2023-10-01), pages 13469-13476, XP034515564, DOI: 10.1109/ICCV51070.2023.01243 [retrieved on 2024-01-15] * sections 2.2 and 2.4 * | 1-15 | |
| A | CHANG CHEIN-I ET AL: "Iterative Gaussian-Laplacian Pyramid Network for Hyperspectral Image Classification", IEEE TRANSACTIONS ON GEOSCIENCE AND REMOTE SENSING, vol. 62, 19 February 2024 (2024-02-19), pages 1-22, XP093249990, USA ISSN: 0196-2892, DOI: 10.1109/TGRS.2024.3367127 * section V * | 1-15 | TECHNICAL FIELDS SEARCHED (IPC) H04N G06N |

The present search report has been drawn up for all claims

| Place of search | Date of completion of the search | Examiner |
|---|---|---|
| Munich | 13 February 2025 | Regidor Arenales, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LADUNE et al.** COOL-CHIC: Coordinate-based low complexity hierarchical image codec. *International Conference on Computer Vision (ICCV)*, 2023
- **ZHANG, RICHARD et al.** The unreasonable effectiveness of deep features as a perceptual metric. *Proceedings of the IEEE conference on computer vision and pattern recognition*, 2018
- **WANG, ZHOU et al.** Image quality assessment: from error visibility to structural similarity.. *IEEE transactions on image processing*, 2004, vol. 13 (4), 600-612